# EUROPEAN PATENT APPLICATION

(11) **EP 1 908 574 A1**
(43) Date of publication of application: **09.04.2008**
(21) Application number: 06020900.4
(22) Date of filing: 05.10.2006
(51) Int. Cl.: B29C 70/04, B29C 70/30, B29B 11/16

(54) **Method for producing self-reinforced polymeric three-dimensional products**

(71) Applicant: NOVAMEER B.V., 5466 AA Veghel (NL)
(72) Inventor: Backer, Jan Adolph Dam, NL-5694 WN Son en Breugel (NL); Kranz, Bart Clemens, NL-5406 AH Uden (NL)
(74) Representative: Muth, Arno

(57) **Abstract**

A method for the producing self-reinforced polymeric three-dimensional products is disclosed comprising the steps of a) chopping a polymeric tape in mono-extruded or co-extruded form into short lengths, b) spraying the chopped polymeric tapes into or onto a porous mould, and c) thermosetting and/or thermobinding the chopped tapes by suitable binders and/or binding matrixes to obtain a preform, characterized in that the chopped polymeric tapes, the binders and/or binding matrixes are already given right from the start in the correct quantity.

## Description

The invention pertains a method for the producing self-reinforced polymeric three-dimensional products comprising the steps of a) chopping a polymeric tape in mono-extruded or co-extruded form into short lengths, b) spraying the chopped polymeric tapes into or onto a porous mould, and c) thermosetting and/or thermobinding the chopped tapes by suitable binders and/or binding matrixes to get a preform.

Routes for the production of "glassfiber preforms" are known (so-called P4 Systems), as the fiber reinforcement for Resin Transfer Molding, Vacuum-Assisted RTM, pressmolding etc. of fiber reinforced thermoset resins, which are usually infiltrated with polyester resin or epoxy resin.

In the present invention the fact is new that not (thermoset resin) injection process follows, but the reinforcing tape, adhesive dispersion, and/or binding matrix are already given right from the start in the correct quantity. It is thus an all-thermoplastic composite part production method.

It allows fairly complicated, three dimensional self-reinforced polymeric products, usually not possibly to produce in another pressing or production method due to the random, discontinuous tapes/fibers, to be made - also in complicated shapes.

In the following the invention will be further elucidated, in the course of which the advantages and objectives will become apparent to those skilled in the art.

One can start with an "overdrawn" self-reinforced polymeric tape, e.g. of a polyolefin type (polypropylene or polyethylene) as currently available from Don & Low, Lankhorst in co-extruded A-B-A structure or as a mono-extruded tape as from Teijin Monofilament or Curv/Propex.

By chopping this tape from a continuous spool into short lengths and spraying this by air pressure, preferably with the aid of a suitable dispersed binder, into/onto a porous shape, a preform is obtained. This porous or perforated form is relatively similar to the finally desired shape, and on the backside of this porous form an air suction through the form would be very beneficial. This helps to place the chopped fibers/tapes into this form.

Where, by overlapping and building up a certain (layer-)thickness the air suction becomes less, the chopped tape-ends, which are very light, will by the airflow automatically move to the parts in the mould, where the suction is the greatest, as in: where the layer is yet the thinnest. The dispersed added-on/sprayed on adhesive will be covering also evenly the tapes/fibers. Also thermoplastic adhesive-powder could be used as a temporary binder.

A suitable apparatus for carrying out the present invention is disclosed by US Patent 5,034,181, wherein a method and an apparatus for manufacturing fiber preforms is described that includes a relatively small motor which is able to power a large fan because the fan is kept in a partial vacuum condition. A duct connects a fan housing to a vacuum box, which has an airflow opening therein of relatively narrow width. A shuttle member is horizontally translatable above the vacuum box on a support bed and the shuttle member is divided into airflow channels by baffle plates. Only a small number of airflow channels can pass above the airflow opening at a single time and this serves to keep low pressure in the vacuum box. In addition, a vortex gate is provided in the duct between the fan housing and the vacuum box and serves to restrict air flow through the duct when the pressure within the duct drops below a certain level.

A favourable composite part should be made with 30 to 60 % (by volume) adhesive resin and 40 to 70 % (by volume) of reinforcing fiber, such as the "overdrawn" polymeric tape/fiber mentioned above.

If an A-B-A tape from either a co-extruded slitted film, or individually co-extruded tapes is made with a relatively thick coating layer (the outside A-sides each between 15 % and 30 % of the total thickness, the reinforcing core (the B-component) being the remainder 40 to 70 % of the tape (by volume), no added binding/adhesive resin will be needed. Either the coating layers on the outside or the inside layer should have a considerably lower melting point than the overdrawn reinforcing fiber.

In case of a B-A-B-tape, wherein the B-layer is meant to be the overdrawn fiber on both outsides, the A-layer is the adhesive/binder in the core; the same advantages can be expected.

Even multi-layered tapes, with many alternating A-B-A-B-A etc. structures will work.

The procedure of chopping, spraying and laying is comparable, but hot air or other methods (with minimum amounts of binder) are needed to stick the chopped tapes together in the desired shape, so that the preform can be taken of/out of the preform mould.

The preforms made (taken off the preform mould) by the present invention can be subject to further treatment under a reasonable pressure (between 1 kg/cm² and 100 kg/cm²), at a temperature above the melting temperature of the adhesive and/or the lower melting layer (such as the A-layer) but below the damaging or shrinking temperature of the reinforcement tape or in case of multi-layered reinforcement tapes of the higher melting layer (such as the B-Layer).

The matrix/adhesive polymer needs to flow readily under the molding-pressure at the given temperature and bind/adhere the overdrawn tape/fiber, and fill any cavities/voids in the laminate.

The cycle time will depend on the thickness of the total laminate. The thicker, the longer it takes to reach in the center the right temperature to allow the lower melting temperature binder resin to flow/fill the cavity and also to cool the parts inside the mould enough to reach a solid part, which can be taken out. However, no injected resin is needed, the matrix/adhesive is already incorporated in the polymeric tape/fiber.

Particularly complicated, three-dimensional parts with corner/angles, where a woven tape fabric or laid unidirectional will not stretch into, could well benefit from the method according to this invention.

## Claims

1. Method for the producing self-reinforced polymeric three-dimensional products comprising the steps of a) chopping a polymeric tape in mono-extruded or co-extruded form into short lengths, b) spraying the chopped polymeric tapes into or onto a porous mould, and c) thermosetting and/or thermobinding the chopped tapes by suitable binders and/or binding matrixes to obtain a preform, **characterized in that** the chopped polymeric tapes, the binders and/or binding matrixes are already given right from the start in the correct quantity.

2. The method according to claim 1, **characterized in that** air is sucked through the porous mould from its backside to place the polymeric tapes in form.

3. The method according to any of the preceding claims, **characterized in that** the binder is an adhesive dispersion sprayed together with chopped polymeric tapes into or onto the porous mould.

4. The method according to any of the preceding claims 1 to 2, **characterized in that** the binder is introduced into or onto the porous mould as part of the polymeric tapes, such as a lower melting layer of a co-extruded polymeric tape.

5. The method according to claim 4, **characterized in that** that the air sucked through the porous mould is on a temperature allowing the lower melt melting layer to melt.

6. The method according to any of the preceding claims, **characterized in that** that the obtained preform is further treated by applying heat and/or pressure.
